# EUROPÄISCHE PATENTSCHRIFT

(11) **EP 0 659 160 B1**
(45) Veröffentlichungstag und Bekanntmachung des Hinweises auf die Patenterteilung: **02.04.1997**
(21) Anmeldenummer: 93918908.0
(22) Anmeldetag: 20.08.1993
(51) Int. Cl.: B65G 1/06, B65G 63/00

(54) **LAGERSYSTEM**
STORAGE SYSTEM
SYSTEME DE STOCKAGE

(30) Priorität: 14.09.1992 DE 4230698
(43) Veröffentlichungstag der Anmeldung: 28.06.1995
(73) Patentinhaber: Trauten, Karl, 55286 Wörrstadt (DE)
(72) Erfinder: BLUM, Albert, CH-2072 St.-Blaise (CH); TRAUTEN, Karl, D-55286 Wörrstadt (DE)
(74) Vertreter: Lippert, Hans-Joachim, Dipl.-Ing.
(86) Internationale Anmeldenummer: DE9300767
(87) Internationale Veröffentlichungsnummer: WO9406708

(56) Entgegenhaltungen:
- DE-C- 3 920 405
- GB-A- 1 178 153

## Beschreibung

Die Erfindung betrifft ein Lagersystem zum Ein- oder Auslagern von insbesondere großvolumigen Lagergütern wie Containern und dergleichen, mit mindestens einer, vorzugsweise mehreren Lagerebenen, die aus parallel zueinander verlaufenden, einzeln antreibbaren, endlos umlaufenden Horizontalförderern mit Stellplätzen für die Lagergüter bestehen, wobei die vorderen und hinteren Enden etwa miteinander fluchten und jeder Lagerebene mindestens zwei quer zur Längserstreckung bzw. Laufrichtung der Horizontalförderer angeordnete, in beide Richtungen ihrer jeweiligen Längsrichtungen verfahrbare Transporteinrichtungen für die Lagergüter zugeordnet sind, von denen eine vor dem vorderen und die andere hinter dem hinteren Ende der Horizontalförderer angeordnet sind, wobei die Transporteinrichtungen die Lagergüter quer zu den Horizontalförderern verfahren und einzeln von den Horizontalförderern übernehmen bzw. an diese übergeben können und Einrichtungen zum Beschicken bzw. Entladen der Transporteinrichtungen vorgesehen sind.

Die Einlagerung von großvolumigen Transport- und Lagergütern wie z.B. Containern auf möglichst engem Raum wird angesichts der steigenden Verwendung von Containern auf Bahnhöfen, Flughäfen oder anderen Transportumschlagplätzen zu einem vorrangigen Problem. Das bloße Abstellen von Containern auf geeigneten Lagerplätzen ist bei diesen Einrichtungen häufig aus Platzmangel nur noch begrenzt möglich, da z.B. zwischen den einzelnen Lagergutreihen Fahrwege für die Transportfahrzeuge freigehalten werden müssen. Andererseits ist z.B. die Einlagerung in Hochregallagern etwa bei Flughäfen problematisch, da diese im Bereich der Einflugschneisen aus Sicherheitsgründen nur eine relativ geringe Bauhöhe aufweisen dürfen. Auch bei den bekannten Hochregallagern müssen zwischen den einzelnen Lagergutreihen Fahrwege für die Beschickungsfahrzeuge freigehalten werden.

Ein gattungsgemäßes Lagersystem ist beispielsweise aus der DE 39 20 405 bekannt. Bei dieser Anlage sind die Ein- und Auslaufseiten getrennt, wobei die Horizontalförderer mit Ausnahme eines als Rücklaufkanales ausgebildeten Förderers die Lagergüter von der Eingabe- zur Ausgabeseite befördern. Lagergüter, die nicht entnommen werden sollen, jedoch bzgl. der Ausgabenseite vor dem zu entnehmenden Lagergut angeordnet sind, werden dabei von den querlaufenden Transporteinrichtungen zum Rücklaufkanal gefördert und mit Hilfe der auf der Eingabeseite angeordneten querlaufenden Transporteinrichtung wieder auf einen Horizontalförderer übergeben. Auf diese Weise sind verhältnismäßig große Umlaufwege mit entsprechend langen Transportzeiten erforderlich, außerdem muß der als Rücklaufkanal ausgebildete Horizontalförderer freibleiben und kann nicht zum Einlagern der Lagergüter dienen.

Eine vergleichbare Lagereinrichtung für Fahrzeuge ist auch aus der GB-PS 1 178 153 bekannt. Die GB-A-1 178 153 betrifft ein Lagersystem, bei dem je Lagereinheit zwei jeweils in unterschiedlichen Richtungen wirkenden Horizontalförderern für einen sequentiellen, kreisförmigen Umlauf von Lagergütern zwei zwischen der Horizontalförderern simultan verschiebbare Shuttle-Träger bzw. Fahrzeugträger zugeordnet sind. Jede Lagereinheit ist beiderseitig an zwei Horizontalförderer angeschlossen, wobei diese Horizontalförderer als sogenannte Express-Förderer mit einem Express-Träger ausgebildet sind. Das Lagersystem ist als Palettenverschiebesystem ausgebildet, wobei die Paletten zu transportierende bzw. zu verschiebende Fahrzeuge aufnehmen. In jeder Lagereinheit sind fünf auf Paletten angeordnete Fahrzeuge mittels der simultan verschiebbaren Fahrzeug-Träger in einem kreisförmigen Umlauf bewegbar. Die Express-Förderer verbinden nun mehrere in einer Reihe angeordnete Lagereinheiten beiderseits jeweils mit einer Einfahrt und einer Ausfahrt. Jeder Reihe von Lagereinheiten sind daher zwei Express-Förderer zugeordnet. Auf jedem Express-Förderer ist jeweils nur ein Express-Träger angeordnet, der die einzulagernden oder auszulagernden Fahrzeuge aus den Lagereinheiten entnimmt oder in diese verbringt. Die zwischen jeder Reihe von Lagereinheiten vorgesehenen Express-Förderer können nicht zum Einlagern von Fahrzeugen dienen, da auf jedem Express-Förderer nur ein Träger bzw. nur eine Transporteinrichtung vorgesehen ist. Aufgrund der Vielzahl von benötigten Express-Förderern wird relativ viel Raum beansprucht. Darüber hinaus ist auch dieses Lagersystem nach Ein- und Ausgabeseite getrennt.

Der Erfindung liegt die Aufgabe zugrunde, ein Lagersystem für insbesondere großvolumige Lagergüter zu schaffen, mit dem bei kurzen Transportwegen eine verbesserte Raumausnutzung innerhalb des Lagers möglich ist.

Diese Aufgabe wird erfindungsgemäß dadurch gelöst, daß jeder Horizontalförderer in beide Richtungen seiner jeweiligen Längserstreckung verfahrbar ist.

Mit dem erfindungsgemäßen Lagersystem ist eine optimale Raumausnutzung zum Einlagern von Lagergütern möglich. Zwischen den parallel zueinander verlaufenden Horizontalförderern müssen keine Freiräume mehr für Einlagerungsfahrzeuge freigehalten werden, außerdem kann die Höhe zwischen den einzelnen Lagerebenen so gewählt sein, daß sie in etwa der Höhe der einzulagernden Güter entspricht, so daß sowohl in vertikaler wie in horizontaler Richtung eine optimale Raumnutzung möglich ist.

In dem erfindungsgemäßen Lager können z.B. bei einer Kantenlänge von jeweils 10 m, d.h. bei einem gesamt umbauten Raum von 1000 m³, 1000 Container eingelagert werden, deren Kantenabmessungen nur geringfügig kleiner als 1 m sind.

Im einzelnen erfolgt die Einlagerung der Lagergüter wie folgt: Ein Container wird zunächst auf eine der quer zu den Horizontalförderern verlaufenden Transporteinrichtungen aufgesetzt. Dieser Container wird dann quer zu den Horizontalförderern vor einen Horizontalförderer gefahren, auf dem noch mindestens ein Lagerplatz frei ist. Befindet sich der entsprechende Lagerplatz unmittelbar hinter der Transporteinrichtung, so wird der Container mittels einer geeigneten Übergabeeinrichtung auf den Horizontalförderer übergeben und entsprechend eingelagert.

Befindet sich jedoch ein Freiplatz im inneren Bereich eines Horizontalförderers, so wird dieser Förderer taktweise in einer seiner Längsrichtungen verfahren, wodurch auf eine am Ende des Horizontalförderers angeordnete Transporteinrichtung ein Container übergeben wird. Durch das Verfahren der querlaufenden Transporteinrichtung beispielsweise bis zum benachbarten Horizontalförderer und gleichzeitigem gegenläufigen Verfahren dieses Horizontalförderers entsteht z. B. im hinteren Bereich des zweiten Horizontalförderers ein Freiraum, da er auf der gegenüberliegenden Seite einen Container auf die vordere Transporteinrichtung übergibt. Durch diesen Ringtausch zwischen den beiden Horizontalförderern, der beliebig oft wiederholbar ist, kann z.B. der freie Stellplatz in Längsrichtung des ersten Horizontalförderers soweit bewegt werden, bis er am Ende bzw. Anfang angelangt ist, wo der neu einzulagernde Container aufgesetzt werden kann.

Selbstverständlich ist es bei dem erfindungsgemäßen Lagersystem möglich, daß beliebige Horizontalförderer ihre Lagergüter durch den entsprechenden Quertransport auf den Transporteinrichtungen austauschen, wobei die günstigsten Möglichkeiten jeweils durch eine entsprechende Computersteuerung mit einer speziellen Software erreicht werden kann.

Die Herausgabe eines bestimmten Containers kann in entsprechender Weise durch einen Ringtausch der Lagergüter erfolgen.

Zur Übergabe der Container von den Horizontalförderern auf die quer dazu verlaufenden Transporteinrichtungen können bekannte Rollsysteme oder dergleichen verwendet werden.

Die Horizontalförderer sind vorzugsweise als sogenannte Horizontalpaternoster ausgebildet, bei denen der Untertrumm aus Platzersparnisgründen möglichst dicht unter dem Obertrumm zurückgeführt werden sollte. Die einzelnen Paternosterglieder können dabei z.B. über Ketten- und Ritzelsysteme miteinander verbunden sein.

Das erfindungsgemäße Lagersystem eignet sich insbesondere zum Einlagern von leeren Flugzeugcontainern. Derartige Container bestehen aus Leichtmetall und weisen trotz eines relativ großen Volumens nur ein geringes Gewicht auf, so daß beim Transport einer ganzen Reihe von Containern nur geringe Kräfte aufgebracht werden müssen.

Die quer zu den Horizontalförderern verlaufenden Transporteinrichtungen können ebenfalls als endlos umlaufende Förderer ausgebildet sein, es ist jedoch auch möglich, z.B. auf Schienen verfahrbare Transportmulden zu verwenden.

Die Verwendung des erfindungsgemäßen Lagersystems kann im Prinzip bereits mit einer Lagerebene erfolgen, es ist jedoch in den meisten Fällen wünschenswert und vorteilhaft, wenn mehrere Transport- bzw. Lagerebenen übereinander aufgebaut sind.

Zur Beschickung der einzelnen Lagerebenen dienen vorzugsweise Hubvorrichtungen, die verfahrbar oder stationär auf der Einlaufseite eines Lagersystems angeordnet sind. Die Hubvorrichtungen können z.B. als Portalstapler ausgebildet sein, deren Lade- bzw. Tragfläche so gesteuert wird, daß sie den entsprechenden Container auf die gewünschte Transporteinrichtung übergeben können.

Vorzugsweise sind zur Beschickung der Transporteinrichtungen mehrere Hubeinrichtungen vorgesehen, die jeweils mehreren übereinander angeordneten Horizontalförderern zugeordnet sind. Dies hat den Vorteil einer großen Be- und Entladegeschwindigkeit, so daß entsprechend hohe Umschläge erzielt werden können.

Bei einem automatisierten Lagersystem, bei dem die Lagerverwaltung mit Hilfe eines Rechners erfolgt, sind vorzugsweise im Eingabebereich Sensoren zur Einzelerfassung und Identifizierung von Einzelcontainern vorgesehen. Diese Sensoren können beispielsweise fest installierte Kameras sein, die etwa den Aufdruck auf einem Container erkennen können und diesen, z.B. bei einem Flughafen, je nach Typ bzw. Fluglinie unterscheiden können. Wenn die Container von den Sensoren identifiziert sind, werden sie über das automatische Fördersystem auf einem freien Lagerplatz gelagert, wobei der Rechner den Lagerplatz speichert und auch dessen eventuelle Veränderung im Lagersystem verfolgt. Die für den Rechner erforderliche Software entspricht im Prinzip der Software eines automatischen Lagerregals mit einer sogenannten chaotischen Lagerung. Hierbei werden nicht einzelne Lagergegenstände in benachbarten Lagerboxen oder Regalen gelagert, sondern für jedes einzelne Lagergut wird die entsprechend günstigst gelegene Lagerstelle durch den Rechner ausgesucht.

Wenn, beispielsweise bei einem Flughafen, mehrere leere Container für eine bestimmte Fluglinie oder für einen bestimmten Typ abgeholt werden sollen, kann es vorteilhaft sein, wenn ein Teilbereich des Lagersystems als Kommissionsbereich ausgebildet ist. Beispielsweise können bestimmte Horizontalförderer oder eine quer zu den Horizontalförderern verlaufende Rollbahn diese Aufgabe übernehmen, so daß die Vorsortierung etwa für eine bestimmte Fluglinie problemlos erfolgen kann und die entsprechende Containeranzahl fertig kommissioniert zur Verfügung steht.

Bei der Verwendung des Lagersystems in einem Bahnhof oder einem Flughafen werden zum An- und Abtransport der Container üblicherweise aus vier Einzelwagen bestehende Züge gebildet, deren Einzelwagen im gleichen Abstand zueinander angeordnet sind.

Wenn das Rastermaß der einzelnen Transportwagen dem Rastermaß der nebeneinander angeordneten Horizontalförderer entspricht, können die Einzelwagen durch die vor den Horizontalförderern angeordneten Hubeinrichtungen, z.B. den erwähnten Portalkränen, gleichzeitig ent- oder beladen werden. Ein Abkoppeln der einzelnen Wagen bzw. ein einzelnes Entladen und Beladen ist damit nicht mehr erforderlich. Durch die Übereinstimmung des Rastermaßes der Transportwagen mit den Horizontalförderern kann bei dem erfindungsgemäßen System auch auf eine manuelle Steuerung des Zuges verzichtet werden, so daß der Personalaufwand zur Ein- und Auslagerung bzw. zum An- und Abtransport sehr gering ist. Im Prinzip muß in das erfindungsgemäße Lagersystem nur noch bei Störfällen eingegriffen werden.

Die Erfindung ist in der Zeichnung beispielsweise veranschaulicht und wird im nachfolgenden anhand der Zeichnung im einzelnen erläutert. Es zeigen:
- Figur 1: eine perspektivische Schemaansicht eines aus drei Ebenen bestehenden Lagers,
- Figur 2: eine perspektivische Ansicht eines teilweise mit Containern gefüllten Lagers zur Verdeutlichung der möglichen Bewegungsrichtungen der Container,
- Figur 3: eine schematische Draufsicht auf eine Lagerebene und
- Figur 4: eine schematische Draufsicht auf eine Lagerebene, bei der die vier linken Horizontalförderer als Puffer- bzw. Kommissionierungsbereich ausgebildet sind.

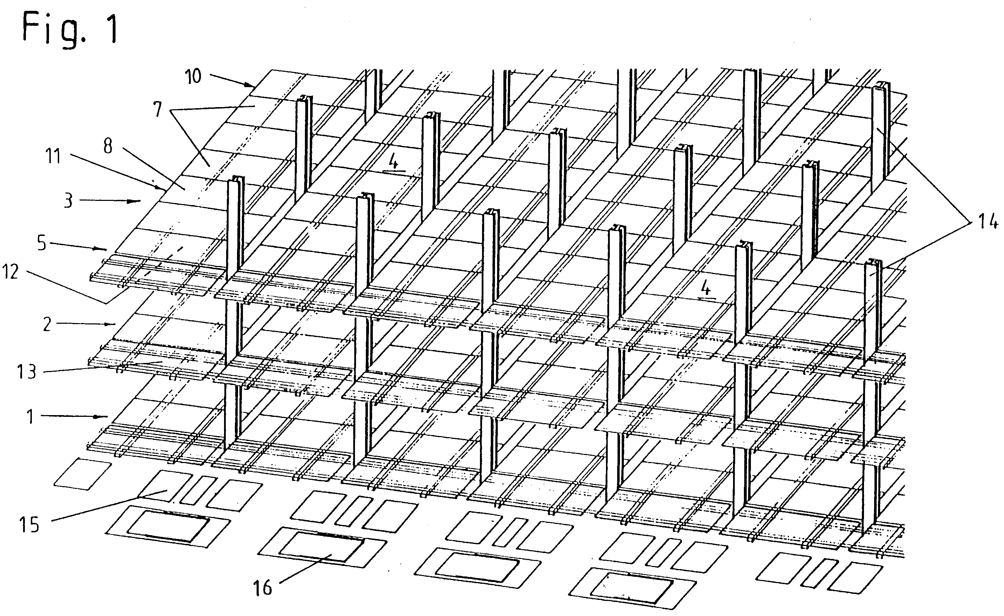

Das in Figur 1 dargestellte Lagersystem besteht aus drei Lagerebenen 1, 2, 3. Die einzelnen Lagerebenen 1, 2, 3 werden gebildet durch mehrere nebeneinander und übereinander angeordnete Horizontalförderer 4, die parallel zueinander angeordnet sind und deren vorderes Ende 5 bzw. hinteres Ende 6 (in Figur 1 nicht dargestellt) miteinander fluchten. Die Horizontalförderer 4 bestehen aus einer Vielzahl von Einzelgliedern 7, die jeweils einen Stellplatz 8 für einen Container 9 bilden. Die Horizontalförderer 4 sind als endlos umlaufende Horizontalpaternoster 10 ausgebildet, deren Obertrumm 11 beispielsweise nach vorne und deren nicht sichtbares Untertrumm 12 in entsprechend gegenläufiger Richtung durch nicht dargestellte Antriebe bzw. Ketten- und Ritzelsysteme taktweise verfahrbar ist.

Quer zu den Horizontalförderern 4 sind jeder Ebene zwei Transporteinrichtungen 13 am vorderen und hinteren Ende der Horizontalförderer 4 zugeordnet, die beispielsweise ebenfalls als Horizontalpaternoster ausgebildet sein können, wobei die Transportrichtung der Transporteinrichtungen 13 quer zur Transportrichtung der Horizontalförderer 4 nach rechts bzw. links zeigen.

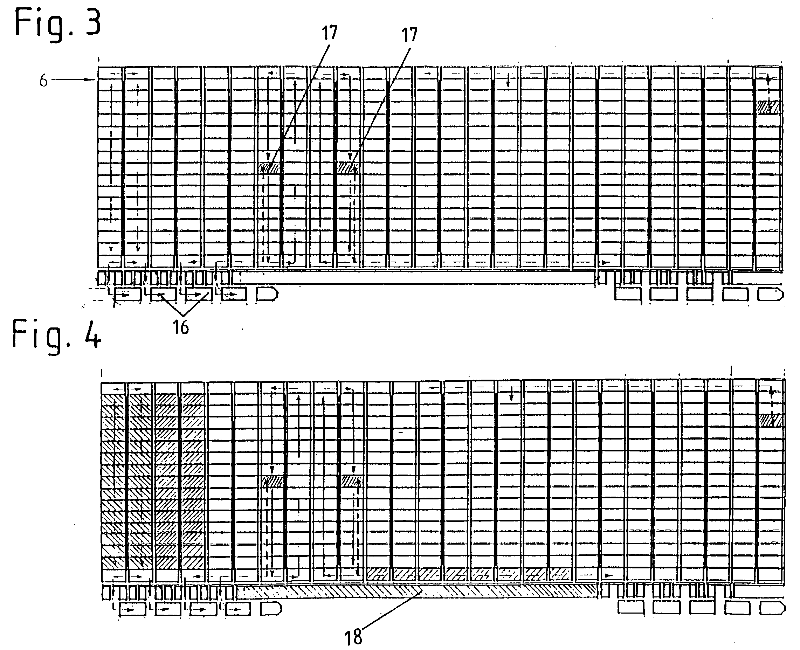

Eine der Transporteinrichtung 13 entsprechende Transporteinrichtung ist am in Figur 1 nicht sichtbaren Ende der die Lagerebenen bildenden Horizontalförderer 4 angeordnet. (vgl. Figur 3 bzw. 4)

Die einzelnen Horizontalförderer 4 bzw. Transporteinrichtungen 13 sind an Stützträgern 14 befestigt, wobei die einzelnen Ebenen im gleichen Abstand zueinander angeordnet sind.

Auf der unteren Lagerebene 1 befinden sich vor der unteren Transporteinrichtung 13 mehrere Stationen 15 auf denen nicht dargestellte Hubvorrichtungen z.B. in Form von Portalstaplern stehen, die die Container 9 von aneinandergekoppelten Wagen 16 abnehmen und der entsprechenden Lagerebene zuführen können.

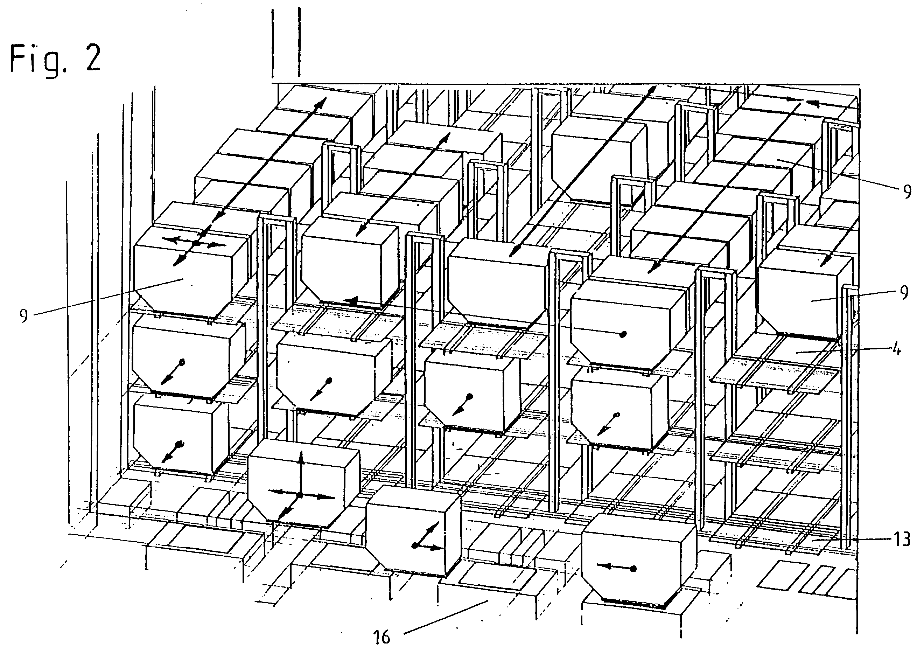

In Figur 2 werden die Transportrichtungen von eingelagerten Containern 9 deutlich.

Im Bereich der Horizontalförderer 4 ist ein Transport in Längsrichtung der Horizontalförderer 4 möglich, während auf der Transporteinrichtung 13 ein Transport auch quer dazu erfolgen kann. Auf diese Weise können entsprechende freie Lagerplätze bzw. entsprechende Horizontalförderer 4 angesteuert werden.

Von den Wagen 16, die üblicherweise mit einem Rollfeld versehen sind, können die Container 9 nach hinten verschoben werden und dort zwischen den einzelnen Wagen 16 von der nicht dargestellten Hubeinrichtung angehoben und übergeben werden.

Das Rastermaß zwischen den einzelnen Horizontalförderern 4 entspricht etwa dem Rastermaß zwischen den Hubeinrichtungen bzw. den Wagen 16, so daß eine gleichzeitige Entladung des Zuges durch die Hubvorrichtungen möglich ist.

Bei der in Figur 3 dargestellten Draufsicht auf eine Lagerebene wird der Transport gezeigt, wenn z.B. die an den schraffierten Stellplätzen 17 befindlichen Container 9 aus dem Lagersystem herausgesucht und zum Zug mit den Wagen 16 transportiert werden soll. Die Stellplätze 17 werden zunächst taktweise nach vorne verschoben, wobei die jeweils auf den Horizontalförderer 4 gestellten Container nach Art eines Ringtausches auf die benachbarten Horizontalförderer 4 übergeben werden, bis schließlich der entsprechende Container 9 auf den Horizontalförderer 4 gelangt, dort zu einem entsprechenden Hubstapler gefördert wird, von ihm übernommen und wiederum auf die Wagen 16 verladen wird.

Bei der in Figur 4 dargestellten Draufsicht ist ein Beispiel gezeigt, bei dem die linken Horizontalförderer 4 als Puffer- bzw. Kommissionierungsbereich ausgebildet sind. Daneben befindet sich vor den unteren Horizontalförderern 4 eine Pufferzone, auf der die zuvor aussortierten Behälter vorsortiert und beispielsweise mittels Rollbahnen 18 zu den Hubstationen bzw. zu den Wagen 16 transportiert werden können.

Im Bereich der Hubstationen nehmen die Container jeweils eine genau zuzuordnende Position ein, so daß hier beispielsweise optische Erkennungssensoren, die mit dem Steuerrechner des Lagers verbunden sind, angeordnet sein können.

### Bezugszeichenliste

- 1: Lagerebene
- 2: Lagerebene
- 3: Lagerebene
- 4: Horizontalförderer
- 5: vorderes Ende
- 6: hinteres Ende
- 7: Einzelglied
- 8: Stellplatz
- 9: Container
- 10: Horizontalpaternoster
- 11: Obertrumm
- 12: Untertrumm
- 13: Transporteinrichtung
- 14: Stützträger
- 15: Station
- 16: Wagen
- 17: schraffierter Stellplatz
- 18: Rollbahn

## Patentansprüche

1. Lagersystem zum Ein- und Auslagern von insbesondere großvolumigen Lagergütern (9) wie Containern und dergleichen, mit mindestens einer, vorzugsweise mehreren Lagerebenen (1, 2, 3), die aus parallel zueinander verlaufenden, einzeln antreibbaren, endlos umlaufenden Horizontalförderern (4) mit Stellplätzen (8) für die Lagergüter (9) bestehen, wobei die vorderen (5) und hinteren Enden (6) etwa miteinander fluchten und jeder Lagerebene (1, 2, 3) mindestens zwei quer zur Längserstreckung bzw. Laufrichtung der Horizontalförderer (4) angeordnete, in beide Richtungen ihrer jeweiligen Längserstreckung verfahrbare Transporteinrichtungen (13) für die Lagergüter (9) zugeordnet sind, von denen eine vor dem vorderen (5) und die andere hinter dem hinteren Ende (6) der Horizontalförderer (4) angeordnet sind, wobei die Transporteinrichtungen (13) die Lagergüter (9) quer zu den Horizontalförderern (4) verfahren und einzeln von den Horizontalförderern (4) übernehmen bzw. an diese übergeben können und Einrichtungen zum Beschicken bzw. Entladen der Transporteinrichtungen (13) versehen sind, **dadurch gekennzeichnet**, daß jeder Horizontalförderer (4) in beide Richtungen seiner jeweiligen Längserstreckung verfahrbar ist.

2. Lagersystem nach Anspruch 1, **dadurch gekennzeichnet**, daß zum Beschicken der Transporteinrichtungen (13) bzw. zum Entladen Hubeinrichtungen vorgesehen sind.

3. Lagersystem nach Anspruch 2, **dadurch gekennzeichnet**, daß die Hubeinrichtungen als Portalstapler ausgebildet sind, deren Hubhöhe zwischen der obersten (3) und untersten Lagerebene (1) variierbar ist.

4. Lagersystem nach Anspruch 2 oder 3, **dadurch gekennzeichnet**, daß zur Beschickung der Transporteinrichtungen (13) mehrere Hubeinrichtungen vorgesehen sind, wobei jede Hubeinrichtung mehreren übereinander angeordneten Horizontalförderern (4) zugeordnet ist.

5. Lagersystem nach einem der Ansprüche 1 bis 4, **dadurch gekennzeichnet**, daß im Bereich der Lagergüterein- bzw. ausgabe Sensoren zur Erfassung und Identifizierung der einzelnen Lagergüter (9) vorgesehen sind.

6. Lagersystem nach Anspruch 5, **dadurch gekennzeichnet**, daß die Sensoren zur Lagerverwaltung und Steuerung mit einem Rechner gekoppelt sind.

7. Lagersystem nach einem der Ansprüche 1 bis 6, **dadurch gekennzeichnet**, daß die Anordnung der Lagergüter (9) im Lager einem sogenannten chaotischen Lagersystem entspricht.

8. Lagersystem nach einem der Ansprüche 1 bis 7, **dadurch gekennzeichnet**, daß die Lagergüter (9) zum An- und Abtransport auf jeweils in gleichem Abstand miteinander verbundenen Transportwagen (16) angeordnet sind, wobei das Rastermaß der Transportwagen (16) bzw. deren Abstand im wesentlichen dem Rastermaß der nebeneinander angeordneten Horizontalförderer (4) entspricht.

## Claims

1. Warehousing system for storage and retrieval, particularly of large-volume stored goods (9), such as containers and the like, with at least one, but preferably several, storage levels (1, 2, 3), consisting of individually operable, endlessly circulating horizontal conveyors (4) which run parallel to one another and have storage locations (8) for the stored goods (9), where the front (5) and rear (6) ends are roughly aligned with one another and each storage level (1, 2, 3) is assigned at least two transport devices (13) for the stored goods (9) which are mounted transversely to the longitudinal length, or the direction of travel, of the horizontal conveyors (4), where one of the transport devices is mounted in front of the front end (5), and the other behind the rear end (6) of the horizontal conveyors (4), and where the transport devices (13) transport the stored goods (9) transversely relative to the horizontal conveyors (4) and can individually retrieve goods from the horizontal conveyors (4), or transfer goods to them and where devices for loading and unloading of the transport devices (13) are provided, **characterised in that** each horizontal conveyor (4) can be operated in both of their respective longitudinal directions.

2. Warehousing system as per Claim 1, **characterised in that** lifting devices are provided for loading and unloading the transport devices (13).

3. Warehousing system as per Claim 2**, characterised in that** the lifting devices are designed as straddle lifts, whose lifting height between the top (3) and bottom (1) storage levels is variable.

4. Warehousing system as per Claim 2 or 3, **characterised in that** several lifting devices are provided for loading the transport devices (13) where each lifting device is assigned to several vertically arranged horizontal conveyors (4).

5. Warehousing system as per one of the Claims 1 to 4, **characterised in that** sensors are provided at the stored goods entry and discharge areas in order to record and identify the individual stored goods (9).

6. Warehousing system as per Claim 5, **characterised in that** the sensors are linked to a computer for warehouse management and control.

7. Warehousing system as per one of the Claims 1 to 6, **characterised in that** the arrangement of the stored goods (9) in the warehouse corresponds to that of a so-called chaotic warehousing system.

8. Warehousing system as per one of the Claims 1 to 7, **characterised in that**, for inward and outward transport, the stored goods (9) are arranged on transport cars (16) which are respectively interconnected at equal distances, where the grid dimensions of the transport cars (16), or their spacing, largely correspond to the grid dimensions of the adjacently positioned horizontal conveyors (4).

## Revendications

1. Système d'entreposage pour la mise en dépôt et hors dépôt de marchandises en stock (9), en particulier de grand volume, telles que des conteneurs ou similaires, comprenant au moins un et, de préférence, plusieurs plans de stockage (1,2,3) qui se composent de transporteurs horizontaux (4) en boucle sans fin, entraînables individuellement et s'étendant parallèlement les uns aux autres, avec des places de stationnement (8) pour les marchandises en stock (9), les extrémités de devant (5) et de derrière (6) de ces transporteurs étant pratiquement alignées entre elles, et au moins deux dispositifs de transport (13) pour les marchandises en stock (9), disposés perpendiculairement à l'étendue longitudinale ou à la direction de marche des transporteurs horizontaux (4) et déplaçables dans les deux directions de leur étendue longitudinale, étant associés à chaque plan de stockage (1,2,3), dispositifs de transport dont l'un est situé en avant de l'extrémité de devant (5) et l'autre en arrière de l'extrémité de derrière (6) des transporteurs horizontaux (4), les dispositifs de transport (13) pouvant déplacer les marchandises en stock (9) transversalement par rapport aux transporteurs horizontaux (4) et les recevoir des transporteurs horizontaux (4) ou les transférer sur ceux-ci, et des dispositifs étant prévus pour le chargement ou le déchargement des dispositifs de transport (13), caractérisé en ce que chaque transporteur horizontal (4) est mobile dans les deux sens de son étendue longitudinale.

2. Système d'entreposage selon la revendication 1, caractérisé en ce qu'il est prévu des dispositifs élévateurs pour le chargement des dispositifs de transport (13) ou pour leur déchargement.

3. Système d'entreposage selon la revendication 2, caractérisé en ce que les dispositifs élévateurs sont réalisés sous forme de chariots cavaliers dont la hauteur de levage peut varier entre le plan de stockage le plus haut (3) et le plan de stockage le plus bas (1).

4. Système d'entreposage selon la revendication 2 ou 3, caractérisé en ce qu'il est prévu plusieurs dispositifs élévateurs pour le chargement des dispositifs de transport (13), chaque dispositif élévateur étant adjoint à plusieurs transporteurs horizontaux (4) superposés.

5. Système d'entreposage selon l'une quelconque des revendications 1 à 4, caractérisé en ce que des capteurs, destinés à détecter et à identifier les marchandises en stock individuelles (9), sont prévus dans la région de l'entrée ou de la sortie de ces marchandises.

6. Système d'entreposage selon la revendication 5, caractérisé en ce que les capteurs sont reliés à un ordinateur pour la gestion du stock et la commande.

7. Système d'entreposage selon l'une quelconque des revendications 1 à 6, caractérisé en ce que la disposition des marchandises en stock (9) dans l'entrepôt correspond à un système d'entreposage dit chaotique.

8. Système d'entreposage selon l'une quelconque des revendications 1 à 7, caractérisé en ce que les marchandises en stock (9) sont disposées, pour leur transport à l'arrivée et au départ, sur des chariots transporteurs (16) reliés entre eux à équidistance, la dimension modulaire des chariots transporteurs (16) ou leur distance mutuelle correspondant essentiellement à la dimension modulaire des transporteurs horizontaux (4) disposés côte à côte.
